Europäisches Patentamt

European Patent Office

Office européen des brevets

(11) Veröffentlichungsnummer: **0 558 985 A2**

## (12) EUROPÄISCHE PATENTANMELDUNG

(21) Anmeldenummer: **93102370.9**

(22) Anmeldetag: **16.02.93**

(51) Int. Cl.5: **H02K 7/08**

(30) Priorität: **04.03.92 DE 4206761**

(43) Veröffentlichungstag der Anmeldung:
**08.09.93 Patentblatt 93/36**

(84) Benannte Vertragsstaaten:
**DE ES FR GB IT**

(71) Anmelder: **Licentia Patent-Verwaltungs-GmbH**
**Theodor-Stern-Kai 1**
**D-60596 Frankfurt(DE)**

(72) Erfinder: **Tillner, Siegfried, Dipl.-Ing.**
**Weissenmoorstrasse 208a**
**W-2900 Oldenburg(DE)**

Erfinder: **Altmann, Manfred, Dipl.-Ing.**
**Im Schilf 17**
**W-2900 Oldenburg(DE)**
Erfinder: **Steinecke, Werner, Dipl.-Ing.**
**Rosenweg 44**
**W-2904 Sandkrug(DE)**
Erfinder: **Kochanek, Horst**
**Marschweg 101**
**W-2904 Sandkrug(DE)**

(74) Vertreter: **Vogl, Leo, Dipl.-Ing.**
**Licentia Patent-Verwaltungs-G.m.b.H.**
**Theodor-Stern-Kai 1**
**D-60596 Frankfurt (DE)**

(54) **Lageranordnung für Rotoren elekfrischer Maschinen.**

(57) Kugellager haben gegenüber geräuscharm laufenden Gleitlagern den Vorteil, daß sie mit höheren Radiallasten beaufschlagt werden können. Allerdings bereitet der Festsitz der Kugellager auf der Läuferwelle durch Schiefaufziehen der Kugellagerringe Schwierigkeiten, welche sich auf die Lagergeräusche und die Lebensdauer der Kugellager negativ auswirken. Dieser Nachteil wird erfindungsgemäß dadurch vermieden, daß auf den Enden der Rotorwelle (25) je ein Kugellager (17, 19) auf Lagerflächen (21, 23) fliegend aufgezogen angeordnet ist. Hierdurch wird ein Schiefsitz der Kugellagerinnenringe (27, 29) auf der Rotorwelle (25) weitgehend ausgeschlossen, wodurch die Lagergeräusche gegenüber den bekannten Anordnungen verringert und die Lebensdauer der Kugellager (17, 19) erhöht werden.

FIG.3

EP 0 558 985 A2

Die Erfindung betrifft eine Lageranordnung für Rotoren elektrischer Maschinen der im Oberbegriff des Patentanspruchs 1 angegebenen Art.

Gleitlager werden bei kleinen Elektromotoren insbesondere als Kalottenlager mit Vorteil verwendet, wenn bei geringen Kosten ein geräuscharmer Lauf gewünscht ist. Die Lebensdauer eines Gleitlagers wird jedoch durch relativ hohe radiale Lagerbelastungen beeinträchtigt.

Kugellager können dagegen ohne merkbare Beeinträchtigungen ihrer Lebensdauer mit höheren Radiallasten beaufschlagt werden. Es ist jedoch erforderlich, das Kugellager "anzustellen" d. h., den Kugellagerinnenring gegen den Außenring axial elastisch vorzuspannen. Dadurch wird die Lagerluft ausgeschaltet, so daß ein geräuscharmer Lauf bei hoher Lebensdauer gewährleistet ist. Es ist zu diesem Zweck üblich, gegen den Außenring des Kugellagers eine axiale Druckfeder wirken zu lassen. Der Innenring des Kugellagers ist hierbei mittels Absätze und/oder Sicherungsringe auf der Welle axial zu fixieren. Bei der Verwirklichung dieses Festsitzes des Kugellagers ist ein Schiefsitzen von deren Kugellagerringen nicht immer auszuschließen. Diese schief sitzenden Kugellagerringe wiederum sind die Ursachen für Planlauffehler und damit für erhöhte Lagergeräusche, welche bei geräuscharbeitenden Elektromotoren zu eliminieren sind. Diese Fehler wirken sich auch insbesondere bei Lageranordnungen von Rotoren in elektrischen Maschinen aus, bei denen die Innenringe der Kugellager mit einem Festsitz auf der Rotorwelle angeordnet sind. Es geht aus der Kugellager-Kinematik hervor, daß bei schiefsitzenden Kugellagerringen folgende Frequenzen in axialer Richtung in Körperschall entstehen. Bei schief sitzendem Innenring beträgt die Frequenz $F_i = F_u \times Z/1 + \frac{Di}{Da}$, während bei schief sitzendem Außenring sich eine Frequenz von $F_a = F_u \times Z/1 + \frac{Da}{Di}$ ergibt. Hierbei sind $F_u = \frac{n}{6}$, n = Motordrehzahl, z = Anzahl der Kugeln im Kugellager, Di = Innendurchmesser des Kugellagers und Da = Außendurchmesser des Kugellagers. Die oben angeführten Formeln lassen eindeutig erkennen, daß die Frequenzen bei schief sitzendem Innenring wesentlich höhere Werte erreichen, als bei einem schief sitzenden Außenring. Dadurch werden bei schief sitzenden Innenringen auch höhere Lagergeräusche erzeugt. Darüberhinaus bewirken die schief sitzenden Kugellagerringe eine Verkürzung der Lebensdauer des Kugellagers.

Der Erfindung liegt die Aufgabe zugrunde, eine Lageranordnung für Rotoren elektrischer Maschinen zu schaffen, bei der bei geringen Kosten und geringer Geräuschentwicklung auch bei hohen radialen Lagerbelastungen eine hohe Lebensdauer erzielt wird. Diese Aufgabe wird durch die im Patentanspruch 1 gekennzeichneten Merkmale gelöst.

Durch die fliegend aufgezogenen Lager auf der Rotorwelle wird eine Schiefstellung der Kugellagerinnenringe weitgehend ausgeschlossen. Dieses wiederum wirkt sich sehr positiv auf die Geräuschreduzierung und auf eine Erhöhung der Lebensdauer der Kugellager aus. Weiterhin sind zusätzliche Sicherungselemente zur axialen Sicherung der Kugellager nicht erforderlich.

Da die fliegend aufgezogenen Lager eine erhöhte Pressung zur Welle erfordern, haben sich C3E-Lager gegenüber Lagern mit Normalluft vorteilhaft bewährt.

Weitere vorteilhafte Ausgestaltungen des Erfindungsgegenstandes sind den weiteren Unteransprüche zu entnehmen.

Die Erfindung wird anhand eines Ausführungsbeispiels im folgenden näher beschrieben. Es zeigen:

Figur 1      einen Längsschnitt durch eine elektrische Kleinmaschine,

Figur 2      den Läufer aus Figur 1 in vergrößerter Darstellung und

Figur 3      eine Einzelheit aus Figur 2.

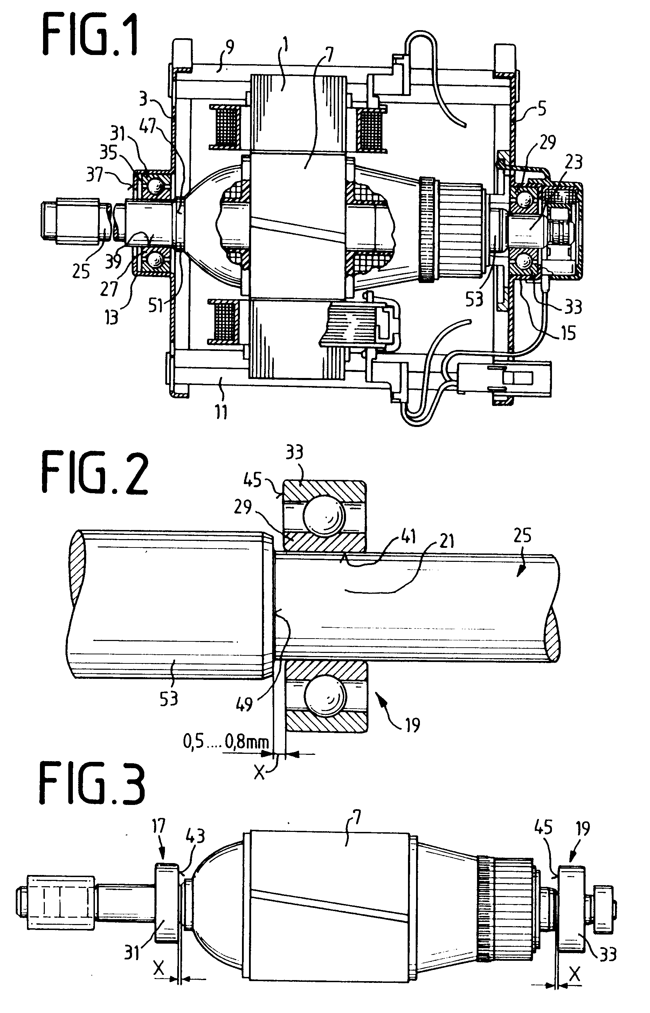

Die Figur 1 zeigt einen Längsschnitt durch eine elektrische Maschine, welche im wesentlichen aus einem Stator 1 und einem in zwei Lagerschilden 3, 5 gelagerten Rotor 7 besteht. Diese beiden Lagerschilde 3, 5 bestehen aus Blechteilen und werden mittels Abstandsprofile 9, 11 unter Zugspannung zusammengehalten. Im Rahmen der Erfindung können der Stator 1 und der Rotor 7 auch in einem geschlossenen Gehäuse angeordnet sein, an dessen Enden sich die Lagerschilde 3, 5 befinden.

Die beiden aus Blech bestehenden Lagerschilde 3, 5 weisen zylinderförmig ausgebildete, tiefgezogene Lagerstellen 13, 15 für Kugellager 17, 19 auf, welche auf Lagerflächen 21 , 23 an den Enden der Läuferwelle 25 fliegend aufgezogen sind. Hierbei sind die Innenringe 27, 29 der beiden Kugellager 17, 19 mittels eines Preßsitzes unverschiebbar auf den Lagerflächen 21, 23 der Läuferwelle 25 befestigt, während die zugehörigen Außenringe 31, 33 in den Lagerschilden 3, 5 mit Gleitsitz verschiebbar gelagert sind. Die beiden Kugellager 17, 19 werden durch eine einzige Feder gegeneinander verspannt. Zu diesem Zweck wirkt eine sich an dem Lagerschild 3 abstützende axiale Anstellfeder auf den Außenring 31 des Kugellagers 17 ein. Diese Anstellfeder ist gemäß Figur 1 eine die Laufwelle 25 umgebende Wellfeder 35, die einerseits an dem Außenring 31 anliegt und sich andererseits auf dem Boden 37 der tiefgezogenen Lagerstelle 13 abstützt. Diese Wellfeder 35 überträgt ihre Druckkraft über den Außenring 31 des ersten Kugellagers 17 auf dessen Innenring 27, von dort über die Läuferwelle 25 auf den Innenring 29 des zweiten Kugellagers 19 und dann schließlich auf dessen Außenring 33. Durch dieses elastische Verspannen wird die Lagerluft ausgeschaltet, so daß ein geräuscharmer Lauf bei hoher Lebensdauer gewährleistet ist.

Der Festsitz der Kugellager 17, 19 auf den Lagerflächen 21, 23 wird dadurch erreicht, daß diese Lagerflächen 21, 23 auf der Läuferwelle ein Abmaß von plus vier bis plus sechs um und die Lagerbohrungen 39, 41 in den Kugellagern 17, 19 ein Abmaß von minus vier bis minus 6 Um aufweisen. In vorteilhafter Ausgestaltung haben sich für diesen Preßsitz als Kugellager 17, 19 C3E-Kugellager bewährt, welche mehr Luft als die Kugellager mit Normalluft aufweisen.

Die fliegend aufgezogenen Kugellager 17, 19 haben zwischen den Seitenflächen 43, 45 der fest auf den Lagerflächen 21 , 23 der Läuferwelle 25 angeordneten Kugellager 17, 19 und den Seitenflächen 47, 49 von den Kugellagern 17, 19 benachbarten Absätzen 51, 53 auf der Läuferwelle 25 einen Mindestabstand von 0,5 bis 0,8 mm. Hierdurch wird ein Schiefsitzen der Kugellagerinnenringe 27, 29 auf der Läuferwelle 25 sicher verhindert.

Durch die fliegend aufgezogenen Kugellager 17, 19 auf der Läuferwelle 25 werden die Lagergeräusche gegenüber den bekannten elektrischen Maschinen noch weiter reduziert. Gleichzeitig wird hierdurch die Lebensdauer der Kugellager erhöht.

**Patentansprüche**

1.  Lageranordnung für Rotoren elektrischer Maschinen mit zwei die Enden der Rotorwelle aufnehmenden Kugellagern, **dadurch gekennzeichnet,** daß die beiden Kugellager (17, 19) mit einem Preßsitz auf der Rotorwelle (25) fliegend aufgezogen angeordnet sind.

2.  Lageranordnung nach Anspruch 1, **dadurch gekennzeichnet,** daß die Innenringen (27, 29) der beiden Kugellager (17, 19) mittels eines Preßsitzes unverschiebbar auf den Lagerflächen (21, 23) der Rotorwelle (25) befestigt sind, daß die zugehörigen Außenringe (31, 33) in Lagerschilden (3, 5) des Motorgehäuses in Gleitsitz verschiebbar gelagert sind und daß eine sich an einem Lagerschild (3) abstützende, axiale Anstellfeder auf den Außenring (31) eines Kugellager (17) einwirkt.

3.  Lageranordnung nach Anspruch 2, **dadurch gekennzeichnet,** daß die Kugellager (17, 19) aus C3E-Kugellagern bestehen.

4.  Lageranordnung nach Anspruch 2 oder 3, **dadurch gekennzeichnet,** daß die Lagerflächen (21, 23) auf der Rotorwelle (25) ein Abmaß von plus vier bis plus sechs μm und die Lagerbohrungen (39, 41) in den Innenringen (27, 29) der Kugellager (17, 19) ein Abmaß von minus vier bis minus sechs μm aufweisen.

5.  Lageranordnung nach einem der vorhergehenden Ansprüche, **dadurch gekennzeichnet,** daß der axiale Abstand zwischen den Seitenflächen (43, 45) der fest auf den Lagerflächen (21, 23) der Rotorwelle (25) angeordneten Kugellager (17, 19) und den Seitenflächen (47, 49) von den Kugellagern (17, 19) benachbarten Absätzen einen Betrag von X = 0,5 bis 0,8 mm aufweist.

6.  Lageranordnung nach einem der vorhergehenden Ansprüche, **dadurch gekennzeichnet,** daß die Anstellfeder eine die Rotorwelle (25) umgebende und an einem Außenring (27) eines Kugellagers (17) anliegende Wellfeder (35) ist, welche sich an dem Lagerschild (3) abstützt.

7.  Lageranordnung nach Anspruch 6, **dadurch gekennzeichnet,** daß die beiden Lagerschilde (3, 5) aus Blechteilen bestehen, zylinderförmig ausgebildete, tiefgezogene Lagerstellen (13, 15) aufweisen und mittels Abstandsprofile (9, 11) unter Zugspannung zusammengehalten werden, wobei die Wellfeder (35) sich auf dem Boden (37) einer tiefgezogenen Lagerstelle (13) abstützt.

8.  Lageranordnung nach Anspruch 7, **dadurch gekennzeichnet,** daß die Wellfeder (35) ihre Druckkraft über den Außenring (31) des ersten Kugellagers (17) auf dessen Innenring (27), von dort über die Rotorwelle (25) auf den Innenring (29) des zweiten Kugellagers (19) und dann auf desen Außenring (33) überträgt.

**FIG.1**

**FIG.2**

0,5....0,8mm

**FIG.3**